# FASCICULE DE BREVET EUROPEEN

(11) **EP 3 601 187 B1**
(45) Date de publication et mention de la délivrance du brevet: **26.10.2022**
(21) Numéro de dépôt: 18715195.6
(22) Date de dépôt: 20.03.2018
(51) Int. Cl.: C03C 25/28, E04G 23/02, C03C 25/285

(54) **GRILLE DE FIBRES DE VERRE POUR LA RENOVATION DE FAÇADES**
GLASFASERNETZ ZUR ERNEUERUNG VON FASSADEN
GRILLE DE FIBRES DE VERRE POUR LA RENOVATION DE FAÇADES

(30) Priorité: 20.03.2017 FR 1752261
(43) Date de publication de la demande: 05.02.2020
(73) Titulaire: Saint-Gobain Adfors, 92400 Courbevoie (FR)
(72) Inventeur: GARNIER, Louis, 75012 Paris (FR); WABLE, Clémence, 93210 La Plaine Saint-Denis (FR); WANIAUSOVA, Lucie, 56116 Dolni Libchavy (CZ)
(74) Mandataire: Saint-Gobain Recherche
(86) Numéro de dépôt international: PCT/FR2018/000059
(87) Numéro de publication internationale: WO 2018/172630

(56) Documents cités:
- WO-A1-2015/004404
- WO-A2-2010/070248
- FR-A1- 3 030 550
- JP-A- 2003 253 891

## Description

La présente invention se rapporte à la rénovation de façades de constructions résidentielles, commerciales ou industrielles.

La rénovation des façades consiste généralement à retirer le revêtement endommagé, fixer une grille en acier galvanisé sur la surface à rénover à l'aide de clous en forme de « U », également en acier galvanisé, appliquer le nouveau revêtement en une couche unique, notamment par pulvérisation, au travers de ladite grille jusqu'à ce que cette dernière ne soit plus visible, et lisser la surface avec un moyen adapté, notamment une truelle.

La fonction de la grille est d'empêcher le revêtement de façade de s'effondrer sous son poids pendant la prise, en particulier aux endroits où l'épaisseur est importante afin de compenser les profondes inégalités de la surface à rénover. L'épaisseur du revêtement de façade peut atteindre plusieurs centimètres.

La grille en acier galvanisé est notamment du type commercialisé par Bekaert sous la dénomination Armanet^{®}. Grâce à ses mailles carrées à ouverture large (12,7 mm, 16 mm ou 19 mm de côté), cette grille permet une bonne pénétration du revêtement de façade.

Le domaine technique auquel se rapporte la présente invention est à distinguer de celui qui consiste à consolider le revêtement de façade au moyen d'une grille de renforcement. Dans le cas d'une façade, la grille est déposée sur une première couche d'un enduit et pressée pour la faire pénétrer au moins partiellement dans ladite couche, puis une deuxième couche d'enduit « de finition » est appliquée et lissée, par exemple au moyen d'une truelle. De telles grilles sont connues et sont généralement constituées de fibres d'aramide (JP 2005133500) ou de verre (JP 2002322816 et JP 2003253891).

Les grilles en acier galvanisées précitées présentent cependant des inconvénients : elles ont un poids élevé, ne peuvent pas être découpées facilement, présentent des extrémités qui peuvent blesser les utilisateurs et en outre elles peuvent être corrodées par le revêtement de façade. Certes, il est possible de remplacer l'acier galvanisé par de l'acier inoxydable mais cela se traduit par une augmentation du coût de la grille généralement inacceptable.

La présente invention a pour but de fournir une alternative aux grilles en acier utilisées pour la rénovation de façades.

Ce but est atteint par une grille de fils de verre qui est revêtue d'un liant organique comprenant au moins un polymère d'au moins deux monomères différents choisis dans le groupe constitué par le styrène, le butadiène, l'acrylonitrile, l'acide (méth)acrylique et les (méth)acrylates d'alkyle, ledit liant représentant au moins 20 % du poids de la grille de fils de verre revêtue.

Le terme « acide (méth)acrylique » comprend l'acide acrylique et l'acide méthacrylique. Le terme « (méth)acrylates d'alkyle » comprend les acrylates d'alkyle et les méthacrylates d'alkyle. Le polymère selon l'invention comprend donc au moins deux monomères différents choisis dans le groupe constitué par le styrène, le butadiène, l'acrylonitrile, l'acide acrylique, l'acide méthacrylique, les acrylates d'alkyle, les méthacrylates d'alkyle.

Le polymère peut comprendre deux monomères choisis parmi les méthacrylates d'alkyle.

De préférence, le polymère selon l'invention comprend comme monomères au moins du styrène et du butadiène.

Le polymère est choisi de telle sorte que le liant final confère de la souplesse et une stabilité dimensionnelle à la grille, ce qui est avantageux lors de la pose de la grille par cloutage. En effet, comme cela est illustré plus loin dans l'exemple, lors de la pose avec enroulement du clou autour d'un point de croisure, la souplesse et la stabilité dimensionnelle de la grille permet de ne pas détériorer la structure de cette dernière avant l'application du revêtement de façade, contrairement à la grille métallique. De préférence, la température de transition vitreuse du polymère est adaptée afin que le liant soit suffisamment souple pour permettre un léger étirement de la grille et suffisamment rigide pour conserver une manipulation aisée de la grille. Le liant est généralement appliqué sur la grille sous la forme d'une composition aqueuse qui contient typiquement 30 à 70 % en poids d'eau, et de préférence 40 à 60 %, voire de 45 à 55 %.

L'application de la composition aqueuse de liant sur la grille en fils de verre est généralement suivie d'une étape de séchage, typiquement à une température qui varie de 130 à 200°C.

Le liant peut comprendre en outre des additifs qui permettent d'avoir une meilleure répartition de celui-ci sur les fils de verre de la grille, notamment un ou plusieurs agents mouillants tels qu'un agent tensioactif, et un ou plusieurs agents dispersants.

Les additifs peuvent représenter jusqu'à 10 %, notamment 5 % en poids du liant, calculé sur la base des matières solides.

Selon l'invention, le liant déposé sur la grille de fils de verre représente au plus 35 % du poids de la grille de fils de verre revêtue, et avantageusement 25 à 30 %.

La grille conforme à l'invention est constituée de fils de verre qui peut être du verre du type E, C, R ou AR (alcali-résistant). On préfère le verre E.

Par « fils de verre », on entend des fils composés d'une multitude de filaments (ou fils de base) et des assemblages de tels fils, notamment sous la forme de stratifils (« rovings » en anglais).

Les fils précités peuvent être des fils sans torsion ou des fils retordus.

Les fils de verre ont une masse linéique qui varie dans une large mesure, par exemple de 200 à 3000 tex. Les filaments de verre qui entrent dans la constitution des fils de verre ont un diamètre qui varie généralement de 5 à 30 µm, notamment de 10 à 20 µm.

Les fils de verre de la grille selon l'invention sont tissés.

Avantageusement, la grille comprend, en chaîne, au moins un fil de verre retordu (fil textile) et, en trame, au moins un fil de verre sans torsion. La masse linéique du fil de chaîne peut varier de 200 à 400 tex, et celle du fil de trame de 1000 à 3000 tex.

Une grille se caractérise en ce que les distances entre deux fils de trames adjacents et deux fils de chaines adjacents sont supérieures à au moins 0,5 mm, de préférence à 1 mm, voire supérieure 5 mm.

Une maille est l'élément de base d'une grille. Selon l'invention, la maille est le motif résultant de l'entrecroisement de fils de chaine et de fils de trame. Chaque croisement définit un point de croisure.

Une dimension d'une maille correspond à la longueur de fil de chaine ou de fil de trame entre deux points de croisure.

Selon l'invention, la taille d'une maille se caractérise par deux longueurs définies entre un point de croisure (i) et deux autres points de croisure (ii) et (iii). Cela correspond en pratique :
- à la longueur de fil de chaine entre ce point de croisure (i) et un autre point de croisure (ii),
- à la longueur de fil de trame entre ce point de croisure (i) et un autre point de croisure (iii).

Selon l'invention, la grille de fils de verre revêtue d'un liant organique comprend des fils de chaîne et des fils de trame définissant une maille présentant deux dimensions comprises, par ordre de préférence croissant, entre 0,5 et 50 mm, entre 1 et 45 mm, entre 2 et 40 mm, entre 5 et 35 mm, entre 10 et 30 mm, entre 12,5 et 25 mm ou entre 15 et 25 mm.

Selon l'invention, on entend par « grille revêtu d'un liant organique », une grille dont les fils la constituant sont recouverts du liant de façon telle que cette grille revêtue demeure une grille. Cela signifie que la grille revêtue de liant présente les paramètres de maille tels que définis dans la présente demande. En pratique, les quantités de liant déposées ne modifient pas les paramètres de maille de la grille non revêtue.

Dans le cas, d'une maille carré, le motif de la maille est délimité par quatre points de croisure définissant un carré. Chaque point de croisure (i) est à équidistance de tous les points de croisure (ii) et (iii) auquel il est relié. La dimension d'une maille carrée est la longueur du côté de ce carré.

Selon l'invention, les mailles peuvent être de forme variée notamment carrée, rectangulaire, triangulaire...

De préférence, la maille de la grille est de forme carrée et son côté a une dimension qui varie de 12,5 à 25 mm, avantageusement 15 à 25 mm.

Selon l'invention, les fils de verre sont tissés selon une armure demi gaze.

La grille de fils de verre tissée selon l'invention présente une armure qui est du type gaze ou du type demi-gaze.

L'armure de type demi-gaze est particulièrement avantageuse car elle permet d'obtenir facilement des grilles de fils de verre stables. En effet, la stabilité de ces structures ouvertes est grandement améliorée par ce type d'armure.

Les armures gaze, correspondant à une armure point ou pas gaze, et demi-gaze sont des tissus dont la chaine est composé de fils fixes (ou fils droits) et de fils mobiles (fils de tour). Les fils mobiles ou les fils de tour peuvent faire un demi-tour ce qui correspond à l'armure demi-gaze (« half-leno » en anglais), un tour complet ce qui correspond à l'armure gaze (« leno » en anglais) ou même plus d'un tour.

Généralement, la grille de fils de verre revêtue présente une masse surfacique qui varie de 50 à 1000 g/m², de préférence 50 à 500 g/m², et avantageusement 100 à 200 g/m².

Un autre objet de la présente invention est l'utilisation de la grille précédemment décrite pour la rénovation de façades de bâtiments résidentiels, commerciaux ou industriels.

Un autre objet de la présente invention est un procédé de rénovation de façade de bâtiments résidentiels, commerciaux et industriels comprenant la fixation de la grille de fils de verre sur la surface à rénover, en particulier par cloutage, après enlèvement du revêtement de façade endommagé, et l'application du nouveau revêtement de façade, en particulier par pulvérisation, sur la grille précitée de manière à la recouvrir entièrement.

Le cloutage de la grille sur la surface à rénover est opéré de préférence à un point de croisure des fils de verre, avantageusement en enroulant chaque clou autour dudit point avant qu'il soit fixé sur la surface à rénover.

L'application du revêtement de façade est de préférence opérée en une seule passe et elle est généralement complétée par une étape de lissage (ou de « finition »).

Les façades concernées peuvent être des façades intérieures et extérieures. Toutefois, il s'agit préférentiellement de façades extérieures.

Les exemples qui suivent permettent d'illustrer l'invention sans toutefois la limiter.

### EXEMPLE 1

On utilise une grille tissée constituée de fils de verre E ayant les caractéristiques suivantes :
- 4 fils de chaîne (masse linéique : 300 tex chacun),
- 1 fil de trame (masse linéique : 1200 tex),
- armure : demi-gaze,
- ouverture de maille : 19 mm x 19 mm,
- épaisseur : 1 mm,
- masse surfacique : 135 g/m².

La grille est revêtue d'un liant organique constitué d'un copolymère de styrène et de butadiène (Litex^{®} S 10714 commercialisé par la société Synthomer) qui représente 27 % du poids du tissu final.

Le tissu présente une résistance en traction égale à 1,75 kN/5cm dans le sens de la chaîne et 2,67 kN/5 cm dans le sens de la trame, mesuré selon la norme NF EN ISO 13934-1.

La grille est appliquée sur un mur de façade à rénover et fixée au moyen de clous d'une manière telle que chaque clou est enroulé autour d'un point de croisure avant d'être enfoncé. On constate que la grille reste intacte, en particulier au niveau des points de cloutage. En outre, du fait de ses propriétés élastiques, la grille est parfaitement tendue.

On pulvérise ensuite un enduit (MEP Reno White^{®} commercialisé par la société Saint-Gobain Weber) sur la grille fixée au mur jusqu'à la recouvrir entièrement. L'enduit ne s'effondre pas pendant la phase de prise.

## Revendications

1. Grille de fils de verre revêtue d'un liant organique, **caractérisée en ce que** le liant comprend au moins un polymère d'au moins deux monomères différents choisis dans le groupe constitué par le styrène, le butadiène, l'acrylonitrile, l'acide (méth)acrylique et les (méth)acrylates d'alkyle, ledit liant représentant au moins 20 % du poids de la grille de fils de verre revêtue et au plus 35 % du poids de la grille de fils de verre revêtue ; et
dans laquelle les fils de verre sont tissés selon une armure gaze ou demi-gaze.

2. Grille selon la revendication 1, dans laquelle le liant représente au plus de 25 à 30% du poids de la grille de fils de verre revêtue.

3. Grille selon la revendication 1 ou 2, comprenant des fils de chaîne et des fils de trame et, en chaîne, au moins un fil de verre retordu et, en trame, au moins un fil de verre sans torsion.

4. Grille selon l'une des revendications 1 à 3, comprenant des fils de chaîne et des fils de trame définissant une maille présentant deux dimensions comprises entre 0,5 et 50 mm.

5. Grille selon l'une des revendications 1 à 4, comprenant des fils de chaîne et des fils de trame définissant une maille présentant deux dimensions comprises entre 10 et 30 mm.

6. Grille selon l'une des revendications 1 à 5, comprenant des fils de chaîne et des fils de trame définissant une maille présentant deux dimensions comprises entre 12,5 et 25 mm.

7. Grille selon l'une des revendications 1 à 6, présentant une maille de forme carrée dont la dimension du côté varie de 12,5 à 25 mm, avantageusement 15 à 25 mm.

8. Grille selon l'une des revendications 1 à 7, présentant une masse surfacique qui varie de 50 à 500 g/m² et de préférence de 100 à 200 g/m².

9. Utilisation de la grille selon l'une des revendications précédentes pour la rénovation de façades intérieures et extérieures de bâtiments résidentiels, commerciaux ou industriels.

10. Procédé de rénovation de façades intérieures et extérieures de bâtiments résidentiels, commerciaux et industriels comprenant la fixation de la grille selon l'une des revendications 1 à 8 sur la surface à rénover, après enlèvement du revêtement de façade endommagé, et l'application du nouveau revêtement de façade, en particulier par pulvérisation, sur ladite grille de manière à la recouvrir entièrement.

11. Procédé selon la revendication 10, dans lequel la grille est fixée par cloutage sur la surface à rénover.

12. Procédé selon la revendication 11, dans lequel le cloutage est effectué à un point de croisure des fils de verre, avantageusement en enroulant chaque clou autour dudit point avant qu'il soit fixé sur la surface à rénover.

## Patentansprüche

1. Glasfadengitter, das mit einem organischen Bindemittel beschichtet ist, **dadurch gekennzeichnet, dass** das Bindemittel mindestens ein Polymer aus mindestens zwei verschiedenen Monomeren umfasst, die ausgewählt sind aus der Gruppe bestehend aus Styrol, Butadien, Acrylnitril, (Meth)acrylsäure und Alkyl(meth)acrylaten, wobei das Bindemittel mindestens 20 % des Gewichts des beschichteten Glasfadengitters und höchstens 35 % des Gewichts des beschichteten Glasfadengitters ausmacht; und wobei die Glasfäden in Dreher- oder Halbdreherbindung gewebt sind.

2. Gitter nach Anspruch 1, wobei das Bindemittel höchstens 25 bis 30 % des Gewichts des beschichteten Glasfadengitters ausmacht.

3. Gitter nach Anspruch 1 oder 2, umfassend Kettfäden und Schussfäden und in der Kette mindestens einen gezwirnten Glasfaden und im Schuss mindestens einen ungezwirnten Glasfaden.

4. Gitter nach einem der Ansprüche 1 bis 3, umfassend Kettfäden und Schussfäden, die eine Masche mit zwei Abmessungen zwischen 0,5 und 50 mm definieren.

5. Gitter nach einem der Ansprüche 1 bis 4, umfassend Kettfäden und Schussfäden, die eine Masche mit zwei Abmessungen zwischen 10 und 30 mm definieren.

6. Gitter nach einem der Ansprüche 1 bis 5, umfassend Kettfäden und Schussfäden, die eine Masche mit zwei Abmessungen zwischen 12,5 und 25 mm definieren.

7. Gitter nach einem der Ansprüche 1 bis 6 mit einer Masche quadratischer Form, deren Seitenabmessung von 12,5 bis 25 mm, vorteilhafterweise 15 bis 25 mm, variiert.

8. Gitter nach einem der Ansprüche 1 bis 7 mit einem Flächengewicht, das von 50 bis 500 g/m² und vorzugsweise von 100 bis 200 g/m² variiert.

9. Verwendung des Gitters nach einem der vorstehenden Ansprüche zur Renovierung von Innen- und Außenfassaden von Wohn-, Geschäfts- oder Industriegebäuden.

10. Verfahren zur Renovierung von Innen- und Außenfassaden von Wohn-, Geschäfts- und Industriegebäuden, umfassend das Befestigen des Gitters nach einem der Ansprüche 1 bis 8 an der zu renovierenden Oberfläche, nachdem die beschädigte Fassadenverkleidung entfernt wurde, und Aufbringen der neuen Fassadenverkleidung, insbesondere durch Sprühen, auf das Gitter auf eine Weise, um es vollständig zu bedecken.

11. Verfahren nach Anspruch 10, wobei das Gitter durch Nageln
an der zu renovierenden Oberfläche befestigt wird.

12. Verfahren nach Anspruch 11, wobei das Nageln an einem Kreuzungspunkt der Glasfäden erfolgt, vorteilhafterweise durch Umwickeln jedes Nagels um diesen Punkt herum, bevor er an der zu renovierenden Oberfläche befestigt wird.

## Claims

1. A glass yarn mesh coated with an organic binder, **characterized in that** the binder comprises at least one polymer of at least two different monomers selected from the group consisting of styrene, butadiene, acrylonitrile, (meth)acrylic acid and alkyl (meth)acrylates, said binder representing at least 20% and at most 35% of the weight of the coated glass yarn mesh; and
wherein the glass yarns are woven according to a leno weave or a half-leno weave.

2. The mesh as claimed in claim 1, wherein the binder represents at most 25 to 30% of the weight of the coated glass yarn mesh.

3. The mesh as claimed in claim 1 or 2, comprising warp yarns and weft yarns and, as warp, at least one twisted glass yarn and, as weft, at least one non-twisted glass yarn.

4. The mesh as claimed in one of claims 1 to 3, comprising warp yarns and weft yarns defining a mesh opening having two dimensions between 0.5 and 50 mm.

5. The mesh as claimed in one of claims 1 to 4, comprising warp yarns and weft yarns defining a mesh opening having two dimensions between 10 and 30 mm.

6. The mesh as claimed in one of claims 1 to 5, comprising warp yarns and weft yarns defining a mesh opening having two dimensions between 12.5 and 25 mm.

7. The mesh as claimed in one of claims 1 to 6, having a square-shaped mesh opening, the dimension of the side of which varies from 12.5 to 25 mm, advantageously 15 to 25 mm.

8. The mesh as claimed in one of claims 1 to 7, having a surface density that varies from 50 to 500 g/m², and advantageously 100 to 200 g/m².

9. The use of the mesh as claimed in one of the preceding claims for renovating interior or exterior facades of residential, commercial or industrial buildings.

10. A process for renovating interior or exterior facades of residential, commercial and industrial buildings comprising the fastening of the mesh as claimed in one of claims 1 to 8 to the surface to be renovated, after removal of the damaged facade coating, and the application of the new facade coating, in particular by spraying, to said mesh so as to cover it completely.

11. The process as claimed in claim 10, wherein the mesh is fastened by nailing to the surface to be renovated.

12. The process as claimed in claim 11, wherein the nailing is carried out at a crossing point of the glass yarns, advantageously by winding each nail around said point before it is fastened to the surface to be renovated.
